# EUROPÄISCHE PATENTSCHRIFT

(11) **EP 3 608 076 B1**
(45) Veröffentlichungstag und Bekanntmachung des Hinweises auf die Patenterteilung: **29.09.2021**
(21) Anmeldenummer: 18188127.7
(22) Anmeldetag: 09.08.2018
(51) Int. Cl.: B29C 33/76, B29C 41/26, B29D 23/00

(54) **VERFAHREN ZUM HERSTELLEN VON MEHRSCHICHTVERBUNDROHREN**
METHOD FOR PRODUCING MULTI-MATERIAL MULTI-LAYER PIPES
PROCÉDÉ DE FABRICATION DE TUBES COMPOSITES MULTICOUCHE

(43) Veröffentlichungstag der Anmeldung: 12.02.2020
(73) Patentinhaber: VENTAFLEX GmbH & Co. KG, 48341 Altenberge (DE)
(72) Erfinder: Stumpf, Volker, 48341 Altenberge (DE)
(74) Vertreter: Pelster Behrends Patentanwälte PartG mbB

(56) Entgegenhaltungen:
- EP-A2- 0 166 245
- WO-A1-98/07523
- GB-A- 1 398 319

## Beschreibung

Die Erfindung betrifft ein Verfahren zum Herstellen von Mehrschichtverbundrohren, mit den Schritten: Erzeugen einer ersten umlaufenden Rohrschicht eines Mehrschichtverbundrohrs durch Aufsprühen eines ersten Materials auf eine sich entlang des Umfangs einer Trägereinrichtung erstreckenden Materialaufnahmefläche, wobei der Umfang der Trägereinrichtung zerstörungsfrei veränderbar ist, und Erzeugen einer zweiten umlaufenden Rohrschicht des Mehrschichtverbundrohrs durch Aufsprühen eines zweiten Materials auf die erste umlaufende Rohrschicht.

Ferner betrifft die Erfindung eine Trägereinrichtung für die Verwendung in der Verbundrohrherstellung, mit einer sich entlang des Umfangs der Trägereinrichtung erstreckenden Materialaufnahmefläche zur Aufnahme von aufgesprühtem Material.

Darüber hinaus betrifft die Erfindung eine Herstellungsanlage für Mehrschichtverbundrohre, mit einer Trägereinrichtung zur Aufnahme von aufzusprühendem Material und einer Sprüheinrichtung zum Aufsprühen von Material.

Mehrschichtverbundrohre finden beispielsweise in Luftführungssystemen Anwendung, welche in Klima-, Heizungs- und Lüftungsanlagen eingesetzt werden können. Es hat sich gezeigt, dass die notwendigen Rohreigenschaften sich besonders vorteilhaft im Rahmen von Mehrschichtkonstruktionen umsetzen lassen. Insbesondere hat sich die Verwendung von Sandwich-Strukturen im Gebiet der Luftführungstechnik durchgesetzt. Aus der Druckschrift WO 1999 022 929 A1 ist beispielsweise ein rotationssymmetrischer Körper bekannt, welcher eine entsprechende Sandwich-Struktur aufweist. Bei dem in der Druckschrift offenbarten Herstellungsverfahren wird ein Reaktionsgemisch auf eine sich entlang des Umfangs eines Dorns erstreckenden Materialaufnahmefläche aufgebracht, wobei zum Entdornen des fertiggestellten Rotationskörpers vorgeschlagen wird, eine Trennschicht in Form einer Folie oder Wachs vor dem Materialauftrag auf die Materialaufnahmefläche aufzubringen.

Darüber hinaus ist aus der Druckschrift US 3,009,209 A ein Rohrherstellungsverfahren bekannt, bei welchem eine Materialmischung aus mehreren Düsen auf einen rotierend angetriebenen Kern gespritzt wird. Ein weiteres Rohrherstellungsverfahren ist aus der Druckschrift GB 1 398 319 A bekannt.

Bei entsprechenden Herstellungsverfahren stellt das Lösen der inneren Mantelfläche der innenliegenden Rohrschicht von der Materialaufnahmefläche der Trägereinrichtung nach der Fertigstellung des Verbundrohres weiterhin ein erhebliches Problem dar. Die bekannten Lösungen erfordern entweder einen zeit- und kostenintensiven Auftrag einer Trennschicht auf die zu beschichtende Materialaufnahmefläche der Trägereinrichtung oder bedingen die Zerstörung der verwendeten Trägereinrichtung zur Entnahme des fertiggestellten Verbundrohres.

Andere bekannte Lösungen verfolgen den Ansatz, ein vorgefertigtes Rohrsegment als Grundlage für den Materialauftragungsprozess zu verwenden, wobei das Rohrsegment nach Fertigstellung des Verbundrohres als innenliegende Rohrschicht weiterverwendet wird. Entsprechende Lösungen bedingen die separate Herstellung oder den Zukauf geeigneter Rohrsegmente. Dies führt letztendlich zu einer erheblichen Steigerung der Herstellungskosten und schränkt den Verbundrohrhersteller in erheblichem Maße bei der Anpassung der Eigenschaften der herzustellenden Mehrschichtverbundrohre ein.

Die der Erfindung zugrundeliegende Aufgabe besteht somit darin, die Herstellung von Mehrschichtverbundrohren zu vereinfachen und/oder zu beschleunigen.

Die Erfindung wird gelöst durch ein Verfahren der eingangs genannten Art, wobei im Rahmen des erfindungsgemäßen Verfahrens der Umfang der Trägereinrichtung zum Lösen der ersten Rohrschicht von der Materialaufnahmefläche verändert wird.

Die Erfindung macht sich die Erkenntnis zunutze, dass durch die zerstörungsfreie Veränderbarkeit des Umfangs der Trägereinrichtung die innere Mantelfläche der ersten umlaufenden Rohrschicht mit einem vergleichsweise geringen Aufwand von der Materialaufnahmefläche der Trägereinrichtung getrennt werden kann. Zum Trennen der inneren Mantelfläche der ersten umlaufenden Rohrschicht von der Materialaufnahmefläche der Trägereinrichtung kann der Umfang der Trägereinrichtung verkleinert bzw. verringert werden, sodass eine Entnahme des hergestellten Mehrschichtverbundrohres von der Trägereinrichtung umgesetzt werden kann. Es ist somit nicht notwendig, dass die Trägereinrichtung zur Entnahme des fertigen Verbundrohres zerstört werden muss. Darüber hinaus kann auf das Auftragen von Trennschichten, beispielsweise einer Folienschicht oder einer Wachsschicht, auf die Materialaufnahmefläche der Trägereinrichtung vor dem Aufsprühen des ersten Materials verzichtet werden. Der Herstellungsvorgang wird somit erheblich beschleunigt, wobei gleichzeitig die Komplexität des Herstellungsprozesses verringert wird.

Das Verändern des Umfangs der Trägereinrichtung erfolgt dabei zerstörungsfrei. Das Verändern des Umfangs der Trägereinrichtung zum Lösen der ersten Rohrschicht von der Materialaufnahmefläche erfolgt vorzugsweise durch ein Verkleinern bzw. Reduzieren des Umfangs der Trägereinrichtung. Wenn die Materialaufnahmefläche der Trägereinrichtung während des Aufsprühens des ersten Materials eine im Wesentlichen zylindrische Form aufweist, kann das Verändern des Umfangs der Trägereinrichtung zum Lösen der ersten Rohrschicht von der Materialaufnahmefläche durch ein Verkleinern des äußeren Durchmessers der Materialaufnahmefläche umgesetzt werden.

Die Materialaufnahmefläche der Trägereinrichtung ist vorzugsweise umlaufend ausgebildet. Insbesondere kann die Materialaufnahmefläche zumindest in einem Zustand der Trägereinrichtung eine zylindrische Grundform oder einen ringförmigen oder ovalen Querschnitt aufweisen. Vorzugsweise führt die Trägereinrichtung oder die Materialaufnahmefläche der Trägereinrichtung während des Aufsprühens des ersten Materials und/oder während des Aufsprühens des zweiten Materials eine Rotationsbewegung aus. Auf diese Weise kann das erste Material und/oder das zweite Material über dem gesamten Umfang verteilt werden, ohne dass eine Rotationsbewegung der Sprüheinrichtung notwendig ist. Vorzugsweise führt die erste umlaufende Rohrschicht eine Rotationsbewegung während des Aufsprühens des zweiten Materials aus. Das Aufsprühen des ersten Materials und/oder das Aufsprühen des zweiten Materials erfolgt mittels einer Sprüheinrichtung, insbesondere einem Sprühkopf. Die Sprüheinrichtung kann eine oder mehrere Sprühdüsen umfassen. Die Sprüheinrichtung kann von einer Bewegungsvorrichtung, insbesondere einem Sprühroboter, bewegt werden. Insbesondere bewegt sich die Sprüheinrichtung während des Aufsprühens des ersten Materials und/oder des zweiten Materials in axialer Richtung des herzustellenden Mehrschichtverbundrohres. Alternativ oder zusätzlich kann sich die Materialaufnahmefläche bzw. die erste umlaufende Rohrschicht während des Aufsprühens in axialer Richtung bewegen.

Die Trägereinrichtung kann als verstellbarer und/oder formveränderlicher, insbesondere als spreizbarer, Dorn ausgebildet sein.

Das erste Material ist vorzugsweise ein Kunststoff, insbesondere ein Thermoplast, ein Duroplast oder ein Elastomer. Das erste Material kann auch ein Kunstharz sein. Das erste Material kann Fasern, insbesondere Glasfasern und/oder Kohlenstofffasern, umfassen. Das zweite Material ist vorzugsweise ein geschäumter Kunststoff, insbesondere geschäumtes Polyurethan.

In einer Weiterbildung des erfindungsgemäßen Verfahrens erfolgt das Verändern des Umfangs der Trägereinrichtung mechanisch, hydraulisch und/oder pneumatisch. Beim mechanischen Verändern des Umfangs der Trägereinrichtung können beispielsweise Stützsegmente, welche die Materialaufnahmefläche ausbilden, bewegt bzw. verfahren werden. Beim hydraulischen und/oder pneumatischen Verändern des Umfangs der Trägereinrichtung kann der Umfang durch Einleiten oder Ausleiten von Flüssigkeit, einem Gas oder Gasgemisch in ein oder mehrere formveränderliche Segmente der Trägereinrichtung umgesetzt werden. In diesem Fall sind die formveränderlichen Segmente der Trägereinrichtung vorzugsweise aus einem flexiblen und/oder elastisch verformbaren Material ausgebildet, sodass eine Zufuhr von Flüssigkeit, Gas oder einem Gasgemisch zu einer Umfangsvergrößerung und eine Abfuhr von Flüssigkeit, Gas oder einem Gasgemisch zu einer Umfangsverkleinerung der Trägereinrichtung führt.

In einer besonders bevorzugten Ausführungsform des erfindungsgemäßen Verfahrens weist die Trägereinrichtung mehrere Stützsegmente auf, welche jeweils einen Abschnitt der Materialaufnahmefläche tragen, wobei das Verändern des Umfangs der Trägereinrichtung das Bewegen eines, mehrerer oder sämtlicher Stützsegmente, insbesondere in radialer Richtung, umfasst. Die Stützsegmente können beispielsweise als Schalenkörper ausgebildet sein, wobei die Gesamtheit der Schalenkörper die gesamte Materialaufnahmefläche bereitstellt. Die Bewegung des einen, der mehreren oder sämtlichen Stützsegmente kann eine Linearbewegung, eine Drehbewegung oder eine Kombinationsbewegung aus beiden Bewegungsformen umfassen. Durch das Bewegen der Stützsegmente in radialer Richtung kann auf besonders einfache Weise eine Veränderung des Umfangs herbeigeführt werden. Durch eine Bewegung der Stützsegmente in Richtung der Mittelachse der Trägereinrichtung kann der Umfang verkleinert werden, wobei eine Umfangsvergrößerung durch ein Bewegen der Stützsegmente von der Mittelachse der Trägereinrichtung weg umgesetzt werden kann.

Außerdem ist ein erfindungsgemäßes Verfahren vorteilhaft, bei welchem mehrere oder sämtliche Stützsegmente bewegt werden, wobei das Bewegen der mehreren oder der sämtlichen Stützsegmente das Bewegen eines ersten Stützsegments oder einer ersten Gruppe von Stützsegmenten, vorzugsweise in radialer Richtung, und/oder das Bewegen eines zweiten Stützsegments oder einer zweiten Gruppe von Stützsegmenten, vorzugsweise in radialer Richtung, umfasst. Das Bewegen des ersten Stützsegments oder der ersten Gruppe von Stützsegmenten und das Bewegen des zweiten Stützsegments oder der zweiten Gruppe von Stützsegmenten erfolgt vorzugsweise zeitversetzt. Vorzugsweise wird zunächst das erste Stützsegment oder die erste Gruppe von Stützsegmenten nach innen verfahren, wodurch ein freier Bewegungspfad für das zweite Stützsegment oder die zweite Gruppe von Stützsegmenten freigegeben wird. Aufgrund des Zeitversatzes kann dann das zweite Stützsegment oder die zweite Gruppe von Stützsegmenten entlang des freigegebenen Bewegungspfads ebenfalls nach innen verfahren werden, wodurch der Umfang der Trägereinrichtung zum Lösen der ersten Rohrschicht von der Materialaufnahmefläche verkleinert wird.

Außerdem ist ein erfindungsgemäßes Verfahren vorteilhaft, bei welchem das eine oder die mehreren Stützsegmente eine Linearbewegung ausführen, wobei die Linearbewegung durch eine Bewegungsumformung aus einer Rotationsbewegung eines Stellglieds umgesetzt wird. Die Linearbewegung des einen oder der mehreren Stützsegmente stellt vorzugsweise eine Hubbewegung dar. Das Stellglied kann beispielsweise eine Einstellwelle sein, welche über gelenkig gelagerte Streben oder ein oder mehrere Kulissenräder mit dem einen oder den mehreren Stützsegmenten verbunden ist. Der Rotationsantrieb des Stellglieds kann beispielsweise über einen Elektromotor umgesetzt werden. Alternativ oder zusätzlich kann der Antrieb des Stellglieds auch hydraulisch oder pneumatisch erfolgen.

In einer anderen Ausführungsform des erfindungsgemäßen Verfahrens wird eine dritte umlaufende Rohrschicht des Mehrschichtverbundrohres durch Aufsprühen eines dritten Materials auf die zweite umlaufende Rohrschicht erzeugt. Das dritte Material entspricht vorzugsweise dem ersten Material. Das dritte Material ist vorzugsweise ein Kunststoff, insbesondere ein Thermoplast, ein Duroplast oder ein Elastomer. Das dritte Material kann auch ein Kunstharz sein. Das dritte Material kann Fasern, insbesondere Glasfasern und/oder Kohlenstofffasern, umfassen. Vorzugsweise führt die Trägereinrichtung und/oder die Materialaufnahmefläche der Trägereinrichtung, die erste umlaufende Rohrschicht und/oder die zweite umlaufende Rohrschicht eine Rotationsbewegung während des Aufsprühens des dritten Materials aus. Die dritte umlaufende Rohrschicht kann noch mit einer Schutzschicht, beispielsweise einer Lackschicht, beschichtet werden. Auf diese Weise kann beispielsweise ein zusätzlicher UV-Schutz des Verbundrohres realisiert werden.

Das erfindungsgemäße Verfahren wird ferner dadurch vorteilhaft weitergebildet, dass das Mehrschichtverbundrohr zur Entnahme aus der Trägereinrichtung, insbesondere in axialer Richtung, bewegt wird und/oder die Trägereinrichtung zur Entnahme des Mehrschichtverbundrohrs aus der Trägereinrichtung, insbesondere in axialer Richtung, bewegt wird. Zum Bewegen des Mehrschichtverbundrohrs kann beispielsweise eine Entnahmeeinrichtung zum Einsatz kommen, welche das Mehrschichtverbundrohr an einer seiner Stirnseiten und/oder an der äußeren Umfangsfläche mit einer Axialkraft beaufschlagt, sodass eine Relativbewegung zwischen dem Mehrschichtverbundrohr und der Trägereinrichtung zur Entnahme des Mehrschichtverbundrohrs umgesetzt wird.

Die der Erfindung zugrundeliegende Aufgabe kann ferner durch ein Mehrschichtverbundrohr gelöst werden, wobei das Mehrschichtverbundrohr nach einer vorstehend beschriebenen Ausführungsform des Verfahrens zum Herstellen von Mehrschichtverbundrohren hergestellt wurde. Hinsichtlich der Eigenschaften, Vorteile und Modifikationen des Mehrschichtverbundrohrs wird auf die Eigenschaften, Vorteile und Modifikationen des erfindungsgemäßen Verfahrens verwiesen.

Die der Erfindung zugrundeliegende Aufgabe wird ferner durch eine Trägereinrichtung der eingangs genannten Art gelöst, wobei die erfindungsgemäße Trägereinrichtung eine Verstelleinrichtung aufweist, welche dazu eingerichtet ist, den Umfang der Trägereinrichtung zum Lösen der ersten Rohrschicht von der Materialaufnahmefläche zerstörungsfrei zu verändern. Die Verstelleinrichtung kann dazu eingerichtet sein, die Umfangsveränderung mechanisch, hydraulisch und/oder pneumatisch umzusetzen.

In einer bevorzugten Ausführungsform der erfindungsgemäßen Trägereinrichtung umfasst die Verstelleinrichtung mehrere Stützsegmente, welche jeweils einen Abschnitt der Materialaufnahmefläche tragen, wobei ein, mehrere oder sämtliche Stützsegmente bewegbar, insbesondere in radialer Richtung bewegbar, ausgebildet sind.

Außerdem ist eine erfindungsgemäße Trägereinrichtung vorteilhaft, welche eine Steuerungseinrichtung aufweist, welche dazu eingerichtet ist, selbsttätig zunächst ein erstes Stützsegment oder eine erste Gruppe von Stützsegmenten, vorzugsweise in radialer Richtung, zu bewegen und anschließend ein zweites Stützsegment oder eine zweite Gruppe von Stützsegmenten, vorzugsweise in radialer Richtung, zu bewegen. Die Bewegung des einen oder der mehreren Stützsegmente kann dabei durch einen entsprechenden Steuerbefehl eines Maschinenbedieners veranlasst werden. Alternativ oder zusätzlich kann die Bewegung des einen oder der mehreren Stützsegmente automatisiert nach Abschluss der Verbundrohrherstellung erfolgen.

In einer weiteren Ausführungsform der erfindungsgemäßen Trägereinrichtung weist die Verstelleinrichtung ein rotierend antreibbares Stellglied und eine Umformmechanik auf, wobei die Umformmechanik dazu eingerichtet ist, eine Rotationsbewegung des Stellglieds in eine Linearbewegung des einen oder der mehreren Stützsegmente umzuformen. Auf diese Weise kann eine Drehbewegung des Stellglieds in eine Hubbewegung der Stützsegmente umgewandelt werden.

Außerdem ist eine erfindungsgemäße Trägereinrichtung vorteilhaft, welche einen Rotationsantrieb aufweist, welcher dazu eingerichtet ist, die Materialaufnahmefläche zu rotieren. Das Rotieren erfolgt vorzugsweise während des Aufsprühens von Material. Auf diese Weise kann Material über den gesamten Umfang aufgesprüht werden, sodass eine im Wesentlichen konstante Materialstärke der einzelnen Schichten des Mehrschichtverbundrohres realisiert werden kann. Die Trägereinrichtung kann auch axial verfahrbar ausgebildet sein, sodass Material über die gesamte Länge der Materialaufnahmefläche aufgesprüht werden kann. Der Rotationsantrieb der Trägereinrichtung erzeugt vorzugsweise eine konstante Rotationsgeschwindigkeit der Materialaufnahmefläche, wodurch die gleichmäßige Verteilung des aufgesprühten Materials über den Umfang gefördert wird.

Die der Erfindung zugrundeliegende Aufgabe wird ferner durch eine Herstellungsanlage der eingangs genannten Art gelöst, wobei die Trägereinrichtung der erfindungsgemäßen Herstellungsanlage nach einer der vorstehend beschriebenen Ausführungsformen ausgebildet ist. Hinsichtlich der Vorteile und Modifikationen der erfindungsgemäßen Herstellungsanlage wird zunächst auf die Vorteile und Modifikationen der erfindungsgemäßen Trägereinrichtung verwiesen.

In einer bevorzugten Ausführungsform der erfindungsgemäßen Herstellungsanlage weist diese eine Bewegungsvorrichtung auf, welche dazu eingerichtet ist, die Sprüheinrichtung während des Aufsprühens von Material auf die Materialaufnahmefläche der Trägereinrichtung zu bewegen, insbesondere in axialer Richtung. Auf diese Weise kann eine über die gesamte Länge der Trägereinrichtung konstante Materialstärke der einzelnen Schichten des Mehrschichtverbundrohres realisiert werden.

Nachfolgend werden bevorzugte Ausführungsformen der Erfindung unter Bezugnahme auf die beiliegenden Zeichnungen näher erläutert und beschrieben. Dabei zeigen:
- Fig. 1a: ein Ausführungsbeispiel der erfindungsgemäßen Herstellungsanlage während des Herstellens eines Mehrschichtverbundrohres in einer schematischen Darstellung;
- Fig. 1b: die in der Fig. 1a abgebildete Herstellungsanlage zu einem späteren Zeitpunkt während des Herstellens eines Mehrschichtverbundrohres in einer schematischen Darstellung;
- Fig. 1c: die in der Fig. 1a und Fig. 1b abgebildete Herstellungsanlage zu einem späteren Zeitpunkt während des Herstellens eines Mehrschichtverbundrohres in einer schematischen Darstellung;
- Fig. 2a: ein Ausführungsbeispiel der erfindungsgemäßen Trägereinrichtung in einer schematischen Seitenansicht;
- Fig. 2b: die in der Fig. 2a abgebildete Trägereinrichtung in einem weiteren Zustand in einer schematischen Seitenansicht;
- Fig. 2c: die in der Fig. 2a abgebildete Trägereinrichtung in einem weiteren Zustand in einer schematischen Seitenansicht;
- Fig. 2d: die in der Fig. 2a abgebildete Trägereinrichtung in einem weiteren Zustand in einer schematischen Seitenansicht;
- Fig. 2e: die in der Fig. 2a abgebildete Trägereinrichtung in einem weiteren Zustand in einer schematischen Seitenansicht;
- Fig. 3a: ein weiteres Ausführungsbeispiel der erfindungsgemäßen Trägereinrichtung in einer schematischen Seitenansicht;
- Fig. 3b: die in der Fig. 3a abgebildete Trägereinrichtung in einem weiteren Zustand in einer schematischen Seitenansicht;
- Fig. 3c: die in der Fig. 3a abgebildete Trägereinrichtung in einem weiteren Zustand in einer schematischen Seitenansicht; und
- Fig. 4: ein Ausführungsbeispiel der erfindungsgemäßen Herstellungsanlage in einer schematischen Darstellung.

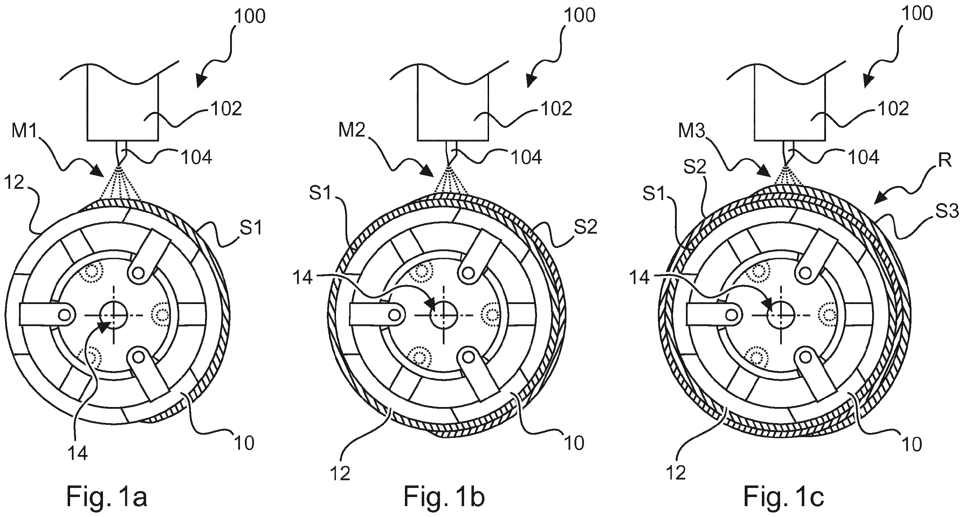

Die in Fig. 1a bis 1c dargestellte Herstellungsanlage 100 dient zum Herstellen von Mehrschichtverbundrohren R. Die Herstellungsanlage 100 umfasst eine Trägereinrichtung 10 und eine Sprüheinrichtung 102.

Die Trägereinrichtung 10 dient zur Aufnahme von aufzusprühendem Material M1 und zum Tragen von in der Herstellung befindlichen Mehrschichtverbundrohren R. Ferner weist die Trägereinrichtung 10 eine sich entlang des Umfangs U der Trägereinrichtung 10 erstreckende Materialaufnahmefläche 12 auf, welche in dem dargestellten Zustand der Trägereinrichtung 10 eine im Wesentlichen zylindrische Grundform aufweist. Die Trägereinrichtung 10 wird während des Aufsprühens von Material M1-M3 rotatorisch angetrieben und führt somit eine Rotationsbewegung um die Rotationsachse 14 aus.

Die Sprüheinrichtung 102 dient zum Aufsprühen von Material M1-M3 und umfasst eine Düse 104, welche das Material M1-M3 in Richtung der Trägereinrichtung 10 abgibt. Dabei können zum Aufsprühen unterschiedlicher Materialien M1-M3 auch unterschiedliche Düsen 104 der Sprüheinrichtung 102 verwendet werden. Die Sprüheinrichtung 102 führt während des Aufsprühens von Material M1-M3 eine Linearbewegung entlang der Materialaufnahmefläche 12 der Trägereinrichtung 10 und parallel zu der Rotationsachse 14 der Trägereinrichtung 10 aus.

In der Fig. 1a wird eine erste umlaufende Rohrschicht S1 des Mehrschichtverbundrohrs R durch Aufsprühen eines ersten Materials M1 auf die sich entlang des Umfangs U der Trägereinrichtung 10 erstreckenden umlaufenden Materialaufnahmefläche 12 erzeugt. Das erste Material M1 ist ein thermoplastischer Kunststoff, welcher Glasfasern aufweist. Abhängig von der beabsichtigten Materialstärke der ersten umlaufenden Rohrschicht S1 kann das erste Material M1 in einer oder mehreren Einzelschichten aufgetragen werden.

In der Fig. 1b wird eine zweite umlaufende Rohrschicht S2 des Mehrschichtverbundrohrs R durch Aufsprühen eines zweiten Materials M2 auf die erste umlaufende Rohrschicht S1 erzeugt. Das zweite Material M2 ist ein geschäumter Kunststoff, nämlich geschäumtes Polyurethan. Abhängig von der beabsichtigten Materialstärke der zweiten umlaufenden Rohrschicht S2 kann das zweite Material M2 in einer oder mehreren Einzelschichten aufgetragen werden.

In der Fig. 1c wird eine dritte umlaufende Rohrschicht S3 des Mehrschichtverbundrohrs R durch Aufsprühen eines dritten Materials M3 auf die zweite umlaufende Rohrschicht S2 erzeugt. Das dritte Material M3 entspricht dabei dem ersten Material M1 und ist demnach ebenfalls ein thermoplastischer Kunststoff, welcher Glasfasern aufweist. Abhängig von der beabsichtigten Materialstärke der dritten umlaufenden Rohrschicht S3 kann das dritte Material M3 in einer oder mehreren Einzelschichten aufgetragen werden.

Das erzeugte Mehrschichtverbundrohr R ist als Rotationskörper ausgebildet und weist eine Sandwich-Struktur auf. Ergänzend kann die dritte umlaufende Rohrschicht S3 noch mit einer Schutzschicht, wie etwa einer Lackschicht, beschichtet werden, beispielsweise um die UV-Beständigkeit des Verbundrohres R zu erhöhen.

Zum Lösen der inneren Mantelfläche der ersten Rohrschicht S1 von der Materialaufnahmefläche 12 der Trägereinrichtung 10 ist der Umfang U der Trägereinrichtung 10 zerstörungsfrei veränderbar. Auf diese Weise kann der Umfang U der Trägereinrichtung 10 nach dem Abschluss der Sprühvorgänge verkleinert werden, sodass das Mehrschichtverbundrohr R und die Trägereinrichtung 10 voreinander getrennt werden können.

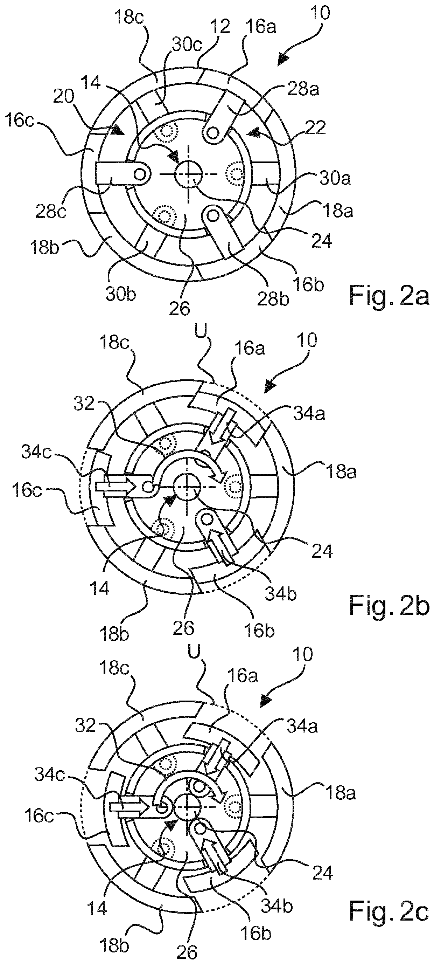

Die Fig. 2a bis 2e zeigen eine entsprechende Umfangsverkleinerung einer Trägereinrichtung 10, welche die Entnahme eines Mehrschichtverbundrohrs R von der Trägereinrichtung 10 erlaubt. Die Figuren stellen aufeinanderfolgende Zustände der Trägereinrichtung 10 während der Umfangsverkleinerung dar, welche mittels einer mechanischen Verstelleinrichtung 20 umgesetzt wird.

Die Trägereinrichtung 10 weist mehrere Stützsegmente 16a-16c, 18a-18c auf, welche jeweils einen Abschnitt der Materialaufnahmefläche 12 tragen. Gemäß der Fig. 2a bilden die Außenflächen der Stützsegmente 16a-16c, 18a-18c noch eine zylindrische Materialaufnahmefläche 12 aus.

In den Fig. 2b und 2c bewegt sich eine erste Gruppe von Stützsegmenten 16a-16c in radialer Richtung, sodass es zu einer Veränderung des Umfangs U der Trägereinrichtung 10 kommt. Die Stützsegmente 16a-16c führen dabei eine Linearbewegung 34a-34c aus, wobei die Linearbewegung 34a-34c eine Hubbewegung der Stützsegmente 16a-16c in Richtung der Rotationsachse 14 der Trägereinrichtung 10 darstellt. Die Radialbewegung der Stützsegmente 16a-16c wird durch eine Bewegungsumformung aus einer Rotationsbewegung 32 eines als Einstellwelle ausgebildeten Stellglieds 24 umgesetzt. Das Stellglied 24 ist über Kulissenräder 26 mit den Streben 28a-28c der Stützsegmente 16a-16c verbunden. Die Kulissenräder 26 sind also Bestandteil einer Umformmechanik 22, welche die Rotationsbewegung 32 des Stellglieds 24 in die Linearbewegung 34a-34c der Stützsegmente 16a-16c umformt.

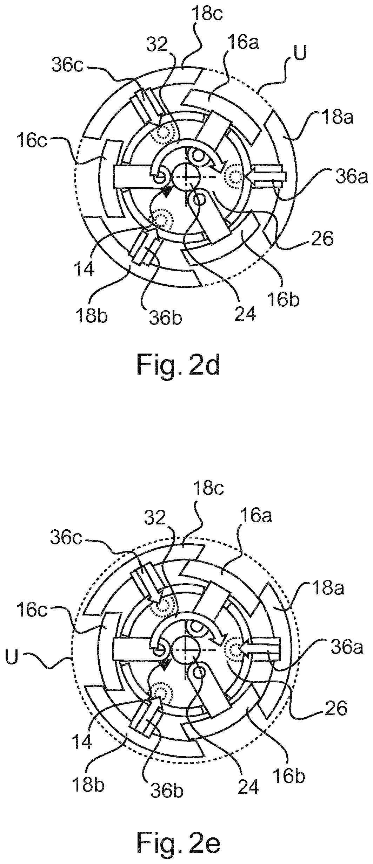

In den Fig. 2d und 2e bewegt sich eine zweite Gruppe von Stützsegmenten 18a-18c in radialer Richtung, sodass es zu einer weiteren Veränderung des Umfangs U der Trägereinrichtung 10 kommt. Die Stützsegmente 18a-18c führen dabei ebenfalls eine Linearbewegung 36a-36c aus, wobei die Linearbewegung 36a-36c auch eine Hubbewegung der Stützsegmente 18a-18c in Richtung der Rotationsachse 14 der Trägereinrichtung 10 darstellt. Die Radialbewegung der Stützsegmente 18a-18c wird in gleicher Weise wie die Radialbewegung der Stützsegmente 16a-16c durch eine Bewegungsumformung aus einer Rotationsbewegung 32 des Stellglieds 24 umgesetzt. Hierzu ist das Stellglied 24 über Kulissenräder 26 mit den Streben 30a-30c der Stützsegmente 18a-18c verbunden.

Wie die Fig. 2e zeigt, wurde der äußere Durchmesser der Trägereinrichtung 10 durch das radiale Bewegen der Stützsegmente 16a-16c, 18a-18c derart verringert, dass zuvor auf der Trägereinrichtung 10 hergestellte Mehrschichtverbundrohr R ohne Weiteres von der Trägereinrichtung 10 getrennt werden kann.

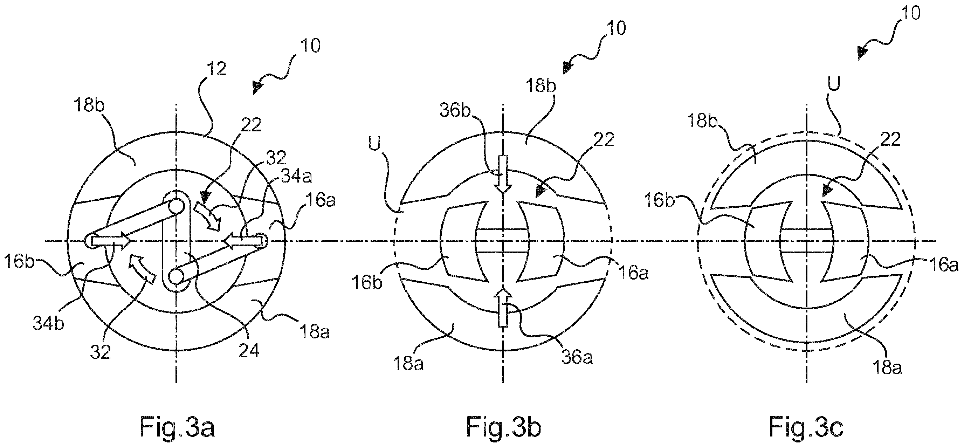

Die Fig. 3a bis 3c zeigen eine weitere Trägereinrichtung 10 während dem Umsetzen einer Umfangsverkleinerung. Anders als die Trägereinrichtung 10 in den Fig. 2a bis 2e weist diese Trägereinrichtung 10 Stützsegmentpaare aus gegenüberliegenden Stützsegmenten 16a, 16b, 18a, 18b auf.

Die Umformmechanik 22, welche eine Rotationsbewegung 32 eines Stellglieds 24 zunächst in die Linearbewegung 34a, 34b der Stützsegmente 16a, 16b und anschließend in eine Linearbewegung 36a, 36b der Stützsegmente 18a, 18b umformt, weist gelenkig befestigte Streben auf, welche das Stellglied 24 mit den Stützsegmenten 16a, 16b, 18a, 18b kinematisch koppeln.

Die Trägereinrichtung 10 kann außerdem mit einer Steuerungseinrichtung ausgestattet sein, welche selbsttätig nach Abschluss der Verbundrohrherstellung zunächst die Stützsegmente 16a, 16b in radialer Richtung bewegt und anschließend die Stützsegmente 18a, 18b in radialer Richtung bewegt, damit das hergestellte Mehrschichtverbundrohr R entnommen werden kann.

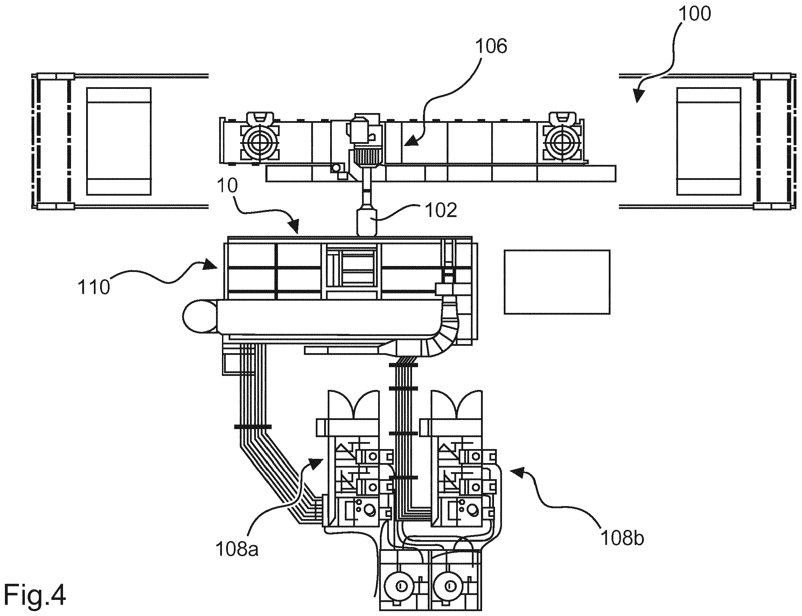

Die Fig. 4 zeigt schematisch eine Herstellungsanlage 100 für Mehrschichtverbundrohre R. Die Sprüheinrichtung 102 kann dabei von einer als Sprühroboter ausgebildeten Bewegungsvorrichtung 106 bewegt werden. Die Bewegungsvorrichtung 106 ist dazu eingerichtet, die Sprüheinrichtung 102 während des Aufsprühens von Material M1-M3 auf die Materialaufnahmefläche 12 der Trägereinrichtung 10 in axialer Richtung zu bewegen. Alternativ oder zusätzlich kann sich auch die Trägereinrichtung 10 während des Sprühens in axialer Richtung bewegen. Die Sprüheinrichtung 102 ist mit den Dosiereinrichtungen 108a, 108b gekoppelt, welche dazu eingerichtet sind, die aufzusprühende Kunststoffmischung zu erzeugen und die der Sprüheinrichtung 102 zur Verfügung gestellte Menge der erzeugten Kunststoffmischung zu dosieren.

Die Materialaufnahmefläche 12 der Trägereinrichtung 10 führt während der Sprühvorgänge eine Rotationsbewegung aus. Diese kann beispielsweise durch einen Elektromotor umgesetzt werden. Die Trägereinrichtung 10 ist in einer Sprühkabine 110 angeordnet, wobei die Sprühkabine 110 über eine Absaugeinrichtung für Sprühnebel verfügt.

### Bezugszeichen

- 10: Trägereinrichtung
- 12: Materialaufnahmefläche
- 14: Rotationsachse
- 16a-16c: Stützsegmente
- 18a-18c: Stützsegmente
- 20: Verstelleinrichtung
- 22: Umformmechanik
- 24: Stellglied
- 26: Kulissenräder
- 28a-28c: Streben
- 30a-30c: Streben
- 32: Rotationsbewegung
- 34a-34c: Linearbewegungen
- 36a-36c: Linearbewegungen

- 100: Herstellungsanlage
- 102: Sprüheinrichtung
- 104: Düse
- 106: Bewegungsvorrichtung
- 108a, 108b: Dosiereinrichtungen
- 110: Sprühkabine

- R: Mehrschichtverbundrohr
- S1-S3: Rohrschichten
- M1-M3: Material
- U: ursprünglicher Umfang

## Patentansprüche

1. Verfahren zum Herstellen von Mehrschichtverbundrohren (R), mit den Schritten:
- Erzeugen einer ersten umlaufenden Rohrschicht (S1) eines Mehrschichtverbundrohrs (R) durch Aufsprühen eines ersten Materials (M1) auf eine sich entlang des Umfangs (U) einer Trägereinrichtung (10) erstreckenden Materialaufnahmefläche (12), wobei der Umfang (U) der Trägereinrichtung (10) zerstörungsfrei veränderbar ist; und
- Erzeugen einer zweiten umlaufenden Rohrschicht (S2) des Mehrschichtverbundrohrs (R) durch Aufsprühen eines zweiten Materials (M2) auf die erste umlaufende Rohrschicht (S1);
- Verändern des Umfangs (U) der Trägereinrichtung (10) zum Lösen der ersten Rohrschicht (S1) von der Materialaufnahmefläche (12).

2. Verfahren nach Anspruch 1,
**dadurch gekennzeichnet, dass** das Verändern des Umfangs (U) der Trägereinrichtung (10) mechanisch, hydraulisch und/oder pneumatisch erfolgt.

3. Verfahren nach Anspruch 1 oder 2,
**dadurch gekennzeichnet, dass** die Trägereinrichtung (10) mehrere Stützsegmente (16a-16c, 18a-18c) aufweist, welche jeweils einen Abschnitt der Materialaufnahmefläche (12) tragen, wobei das Verändern des Umfangs (U) der Trägereinrichtung (10) den folgenden Schritt umfasst:
- Bewegen eines, mehrerer oder sämtlicher Stützsegmente (16a-16c, 18a-18c), insbesondere in radialer Richtung.

4. Verfahren nach Anspruch 3,
**dadurch gekennzeichnet, dass** mehrere oder sämtliche Stützsegmente (16a-16c, 18a-18c) bewegt werden, wobei das Bewegen der mehreren oder der sämtlichen Stützsegmente (16a-16c, 18a-18c) einen, mehrere oder sämtliche der folgenden Schritte umfasst:
- Bewegen eines ersten Stützsegments (16a-16c) oder einer ersten Gruppe von Stützsegmenten (16a-16c), vorzugsweise in radialer Richtung;
- Bewegen eines zweiten Stützsegments (18a-18c) oder einer zweiten Gruppe von Stützsegmenten (18a-18c), vorzugsweise in radialer Richtung;
wobei das Bewegen des ersten Stützsegments (16a-16c) oder der ersten Gruppe von Stützsegmenten (16a-16c) und das Bewegen des zweiten Stützsegments (18a-18c) oder der zweiten Gruppe von Stützsegmenten (18a-18c) zeitversetzt erfolgt.

5. Verfahren nach Anspruch 3 oder 4,
**dadurch gekennzeichnet, dass** das eine oder die mehreren Stützsegmente (16a-16c, 18a-18c) eine Linearbewegung (34a-34c, 36a-36c) ausführen, wobei die Linearbewegung (34a-34c, 36a-36c) durch eine Bewegungsumformung aus einer Rotationsbewegung (32) eines Stellglieds (24) umgesetzt wird.

6. Verfahren nach einem der vorstehenden Ansprüche,
**gekennzeichnet durch** den Schritt:
- Erzeugen einer dritten umlaufenden Rohrschicht (S3) des Mehrschichtverbundrohrs (R) durch Aufsprühen eines dritten Materials (M3) auf die zweite umlaufende Rohrschicht (S2).

7. Verfahren nach einem der vorstehenden Ansprüche,
**gekennzeichnet durch** zumindest einen der folgenden Schritte:
- Bewegen des Mehrschichtverbundrohrs (R), insbesondere in axialer Richtung, zur Entnahme des Mehrschichtverbundrohrs (R) aus der Trägereinrichtung (10);
- Bewegen der Trägereinrichtung (10), insbesondere in axialer Richtung, zur Entnahme des Mehrschichtverbundrohrs (R) aus der Trägereinrichtung (10).

8. Trägereinrichtung (10) für die Verwendung in der Verbundrohrherstellung, mit:
- einer sich entlang des Umfangs (U) der Trägereinrichtung (10) erstreckenden Materialaufnahmefläche (12) zur Aufnahme von aufgesprühtem Material (M1); und
- einer Verstelleinrichtung (20), welche dazu eingerichtet ist, den Umfang (U) der Trägereinrichtung (10) zum Lösen der ersten Rohrschicht (S1) von der Materialaufnahmefläche (12) zerstörungsfrei zu verändern.

9. Trägereinrichtung (10) nach Anspruch 8,
**dadurch gekennzeichnet, dass** die Verstelleinrichtung (20) mehrere Stützsegmente (16a-16c, 18a-18c) umfasst, welche jeweils einen Abschnitt der Materialaufnahmefläche (12) tragen, wobei ein, mehrere oder sämtliche Stützsegmente (16a-16c, 18a-18c) bewegbar, insbesondere in radialer Richtung bewegbar, ausgebildet sind.

10. Trägereinrichtung (10) nach Anspruch 9,
**gekennzeichnet durch** eine Steuerungseinrichtung, welche dazu eingerichtet ist, selbsttätig zunächst ein erstes Stützsegment (16a-16c) oder eine erste Gruppe von Stützsegmenten (16a-16c), vorzugsweise in radialer Richtung, zu bewegen und anschließend ein zweites Stützsegment (18a-18c) oder eine zweite Gruppe von Stützsegmenten (18a-18c), vorzugsweise in radialer Richtung, zu bewegen.

11. Trägereinrichtung (10) nach Anspruch 9 oder 10,
**dadurch gekennzeichnet, dass** die Verstelleinrichtung (20) ein rotierend antreibbares Stellglied (24) und eine Umformmechanik (22) aufweist, wobei die Umformmechanik (22) dazu eingerichtet ist, eine Rotationsbewegung (32) des Stellglieds (24) in eine Linearbewegung (34a-34c, 36a-36c) des einen oder der mehreren Stützsegmente (16a-16c, 18a-18c) umzuformen.

12. Trägereinrichtung (10) nach einem der Ansprüche 8 bis 11,
**gekennzeichnet durch** einen Rotationsantrieb, welcher dazu eingerichtet ist, die Materialaufnahmefläche (12) zu rotieren.

13. Herstellungsanlage (100) für Mehrschichtverbundrohre (R), mit
- einer Trägereinrichtung (10) zur Aufnahme von aufzusprühendem Material (M1); und
- einer Sprüheinrichtung (102) zum Aufsprühen von Material (M1-M3), **dadurch gekennzeichnet, dass** die Trägereinrichtung (10) nach einem der Ansprüche 8 bis 12 ausgebildet ist.

14. Herstellungsanlage (100) nach Anspruch 13,
**gekennzeichnet durch** eine Bewegungsvorrichtung (106), welche dazu eingerichtet ist, die Sprüheinrichtung (102) während des Aufsprühens von Material (M1-M3) auf die Materialaufnahmefläche (12) der Trägereinrichtung (10) zu bewegen, insbesondere in axialer Richtung.

## Claims

1. Method for producing of multi-layer composite pipes (R), comprising the steps:
- Generating of a first circumferential pipe layer (S1) of a multi-layer composite pipe (R) by spraying a first material (M1) onto a material-receiving surface (12) extending along the circumference (U) of a support unit (10), wherein the circumference (U) of the support unit (10) is non-destructively adjustable; and
- Generating of a second circumferential pipe layer (S2) of the multi-layer composite pipe (R) by spraying a second material (M2) onto the first circumferential pipe layer (S1);
- Adjusting the circumference (U) of the support unit (10) for detaching the first circumferential pipe layer (S1) from the material-receiving surface (12).

2. The method according to claim 1,
**characterized in that** the adjusting of the circumference (U) of the support unit (10) is performed mechanically, hydraulically and/or pneumatically.

3. The method according to claim 1 or 2,
**characterized in that** the support unit (10) comprises a plurality of support segments (16a-16c, 18a-18c), each carrying a portion of the material-receiving surface (12), wherein adjusting the circumference (U) of the support unit (10) comprises the following step:
- Moving one, several or all of the support segments (16a-16c, 18a-18c), in particular in radial direction.

4. The method according to claim 3,
**characterized in that** multiple or all of the support segments (16a-16c, 18a-18c) are moved, wherein moving the multiple or all of the support segments (16a-16c, 18a-18c) comprises one, several or all of the following steps:
- Moving a first support segment (16a-16c) or a first group of support segments (16a-16c), preferably in radial direction;
- Moving a second support segment (18a-18c) or a second group of support segments (18a-18c), preferably in radial direction;
wherein the movement of the first support segment (16a-16c) or the first group of support segments (16a-16c) and the movement of the second support segment (18a-18c) or the second group of support segments (18a-18c) is performed with a time offset.

5. A method according to claim 3 or 4,
**characterized in that** the one or the multiple support segments (16a-16c, 18a-18c) perform a linear movement (34a-34c, 36a-36c), wherein the linear movement (34a-34c, 36a-36c) is realized by a motion transformation from a rotational movement (32) of an actuating member (24).

6. A method according to any of the preceding claims,
**characterized by** the step:
- Generating of a third circumferential pipe layer (S3) of the multi-layer composite pipe (R) by spraying a third material (M3) onto the second circumferential pipe layer (S2).

7. Method according to any of the preceding claims,
**characterized by** at least one of the following steps:
- Moving the multi-layer composite pipe (R), in particular in axial direction, to remove the multi-layer composite pipe (R) from the support unit (10);
- Moving the support unit (10), in particular in axial direction, to remove the multi-layer composite pipe (R) from the support unit (10).

8. A support unit (10) for use in composite pipe production, comprising:
- a material-receiving surface (12) extending along the circumference (U) of the support unit (10) for receiving sprayed-on material (M1); and
- an adjustment unit (20), configured to non-destructively adjust the circumference (U) of the support unit (10) to detach the first pipe layer (S1) from the material-receiving surface (12).

9. A support unit (10) according to claim 8,
**characterized in that** the adjustment unit (20) comprises multiple support segments (16a-16c, 18a-18c), each carrying a portion of the material-receiving surface (12), wherein one, several or all support segments (16a-16c, 18a-18c) are designed to be movable, in particular movable in the radial direction.

10. Support unit (10) according to claim 9,
**characterized by** a control unit configured to automatically move a first support segment (16a-16c) or a first group of support segments (16a-16c), preferably in radial direction, at first and subsequently move a second support segment (18a-18c) or a second group of support segments (18a-18c), preferably in radial direction.

11. Support unit (10) according to claim 9 or 10,
**characterized in that** the adjustment unit (20) comprises a rotatably drivable actuating member (24) and a transforming mechanism (22), the transforming mechanism (22) being configured to transform a rotational movement (32) of the actuating member (24) into a linear movement (34a-34c, 36a-36c) of the one or multiple support segments (16a-16c, 18a-18c).

12. Support unit (10) according to one of the claims 8 to 11,
**characterized by** a rotational drive, configured to rotate the material-receiving surface (12).

13. Manufacturing apparatus (100) for multi-layer composite pipes (R), comprising
- a support unit (10) for receiving material to be sprayed (M1); and
- a spraying unit (102) for spraying material (M1-M3),
**characterized in that** the support unit (10) is configured according to any of the claims 8 to 12.

14. Manufacturing apparatus (100) according to claim 13,
**characterized by** a movement unit (106), configured to move the spraying unit (102) during the spraying of material (M1-M3) onto the material-receiving surface (12) of the support unit (10), in particular in axial direction.

## Revendications

1. Procédé de fabrication de tuyaux composites multicouches (R), avec les étapes :
- réalisation d'une première couche de tuyau (S1) périphérique d'un tuyau composite multicouche (R) par pulvérisation d'un premier matériau (M1) sur une surface de réception de matériau (12) s'étirant le long de la circonférence (U) d'un dispositif support (10), ladite circonférence (U) dudit dispositif support (10) pouvant être modifiée sans causer de dégât ; et
- réalisation d'une deuxième couche de tuyau (S2) périphérique dudit tuyau composite multicouche (R) par pulvérisation d'un deuxième matériau (M2) sur la première couche de tuyau (S1) périphérique ;
- modification de la circonférence (U) dudit dispositif support (10) pour détacher la première couche de tuyau (S1) de la surface de réception de matériau (12).

2. Procédé selon la revendication 1,
**caractérisé en ce que** la modification de la circonférence (U) du dispositif support (10) s'effectue par voie mécanique, hydraulique et/ou pneumatique.

3. Procédé selon la revendication 1 ou 2,
**caractérisé en ce que** le support (10) présente plusieurs segments d'appui (16a - 16c, 18a - 18c) qui portent chacun une portion de la surface de réception de matériau (12), la modification de la circonférence (U) du dispositif support (10) comprenant l'étape suivante :
- déplacement d'un, de plusieurs ou de tous les segment(s) d'appui (16a - 16c, 18a - 18c), notamment dans le sens radial.

4. Procédé selon la revendication 3,
**caractérisé en ce que** plusieurs ou tous les segments d'appui (16a - 16c, 18a - 18c) sont déplacés, le déplacement des plusieurs ou de tous les segments d'appui (16a - 16c, 18a - 18c) comprenant une, plusieurs ou toutes les étape(s) suivante(s) :
- déplacement d'un premier segment d'appui (16a - 16c) ou d'un premier groupe de segments d'appui (16a - 16c), de préférence dans le sens radial ;
- déplacement d'un deuxième segment d'appui (18a - 18c) ou d'un deuxième groupe de segments d'appui (18a - 18c), de préférence dans le sens radial ;
le déplacement du premier segment d'appui (16a - 16c) ou du premier groupe de segments d'appui (16a - 16c), et le déplacement du deuxième segment d'appui (18a - 18c) ou du deuxième groupe de segments d'appui (18a - 18c) s'effectuent avec un décalage temporaire.

5. Procédé selon la revendication 3 ou 4,
**caractérisé en ce que** ledit un segment d'appui ou lesdits plusieurs segments d'appui (16a - 16c, 18a - 18c) décrit/décrivent un mouvement linéaire (34a - 34c, 36a - 36c), ledit mouvement linéaire (34a - 34c, 36a - 36c) étant exécuté par une transformation de mouvement à partir d'un mouvement de rotation (32) d'un actionneur (24).

6. Procédé selon l'une quelconque des revendications précédentes, **caractérisé par** l'étape :
- réalisation d'une troisième couche de tuyau (S3) périphérique dudit tuyau composite multicouche (R) par pulvérisation d'un troisième matériau (M3) sur la deuxième couche de tuyau (S2) périphérique.

7. Procédé selon l'une quelconque des revendications précédentes, **caractérisé par** au moins une des étapes suivantes :
- déplacement du tuyau composite multicouche (R), notamment dans le sens axial, pour retirer le tuyau composite multicouche (R) du dispositif support (10) ;
- déplacement du dispositif support (10), notamment dans le sens axial, pour retirer le tuyau composite multicouche (R) du dispositif support (10).

8. Dispositif support (10) destiné à être mis en œuvre dans la fabrication de tuyaux composites, avec :
- une surface de réception de matériau (12) s'étirant le long de la circonférence (U) du dispositif support (10), dédiée à la réception de matériau (M1) pulvérisé ; et
- un dispositif régleur (20) destiné à modifier, sans causer de dégât, la circonférence (U) du dispositif support (10) pour détacher la première couche de tuyau (S1) de la surface de réception de matériau (12).

9. Dispositif support (10) selon la revendication 8,
**caractérisé en ce que** le dispositif régleur (20) comprend plusieurs segments d'appui (16a - 16c, 18a - 18c) qui portent chacun une portion de la surface de réception de matériau (12), un, plusieurs ou tous les segments d'appui (16a - 16c, 18a - 18c) étant réalisé(s) de sorte à pouvoir être déplacé(s), notamment dans le sens radial.

10. Dispositif support (10) selon la revendication 9,
**caractérisé par** un dispositif de commande qui est destiné à déplacer de lui-même tout d'abord un premier segment d'appui (16a - 16c) ou un premier groupe de segments d'appui (16a - 16c), de préférence dans le sens radial, et à déplacer ensuite un deuxième segment d'appui (18a - 18c) ou un deuxième groupe de segments d'appui (18a - 18c), de préférence dans le sens radial.

11. Dispositif support (10) selon la revendication 9 ou 10,
**caractérisé en ce que** le dispositif régleur (20) présente un actionneur (24) entraînable en rotation et un système mécanique de transformation (22), ledit système mécanique de transformation (22) étant destiné à transformer un mouvement de rotation (32) de l'actionneur (24) en un mouvement linéaire (34a - 34c, 36a - 36c) de l'un ou des plusieurs segments d'appui (16a - 16c, 18a - 18c).

12. Dispositif support (10) selon l'une quelconque des revendications 8 à 11, **caractérisé par** un entraînement en rotation destiné à mettre en rotation la surface de réception de matériau (12).

13. Machine de fabrication (100) de tuyaux composites multicouches (R), dotée
- d'un dispositif support (10) pour recevoir du matériau pulvérisé (M1) ; et
- un dispositif pulvérisateur (102) pour pulvériser du matériau (M1 - M3),
**caractérisée en ce que** le dispositif support (10) est réalisé selon l'une quelconque des revendications 8 à 12.

14. Machine de fabrication (100) selon la revendication 13,
**caractérisée par** un dispositif de déplacement (106) destiné à déplacer le dispositif pulvérisateur (102) au cours de la pulvérisation de matériau (M1 - M3) sur la surface de réception de matériau (12) du dispositif support (10), notamment dans le sens axial.
